# EUROPEAN PATENT APPLICATION

(11) **EP 2 196 842 A1**
(43) Date of publication of application: **16.06.2010**
(21) Application number: 08275085.2
(22) Date of filing: 12.12.2008
(51) Int. Cl.: G02B 27/01, F21V 8/00

(54) **Improvements in or relating to waveguides**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A waveguide 112 includes a substrate of material 134 having optical layers 148, 152 applied to two external surfaces 146, 150. This reduces the critical angle φ_{c5} of the substrate of material 134 to provide greater interaction between image bearing light following a light path 140 and a grating element 142 and/or a greater total field of view 160, when compared to the total field of view 132 of a prior art waveguide 110, that is capable of being transmitted by the waveguide 112.

Such a waveguide 112 can be used in a projection display.

## Description

This invention relates to a waveguide and a projection display for displaying an image to an observer, which is particularly, but not exclusively, suitable for use in a head up display, a helmet mounted display or head mounted display.

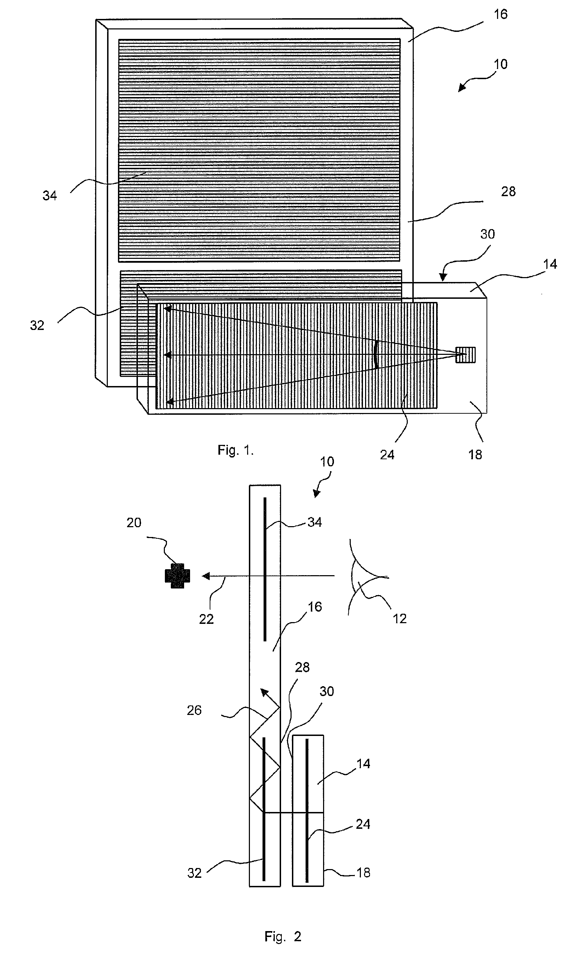

Referring to Figures 1 and 2, wherein like references have been used to indicate similar integers, prior art International patent application publication number W02007/029032 teaches a projection display 10 for displaying an image to an observer 12 that uses waveguide techniques to generate a collimated display defining a large exit pupil at the point of the observer 12 and a large field of view, whilst using a small image-providing light source device. The projection display 10 uses a first plate-like waveguide 14 made of light transmissive material such as glass or plastic and a second plate-like waveguide 16 made from a light transmissive and light transparent material such as glass or plastic. The projection display 10 additionally includes an image-providing light source device, not shown, located to inject image bearing light into the first plate-like waveguide 14 through a first face 18.

The image-providing light source device includes a micro-display arranged to provide information to be displayed to the observer 12. Additionally the image-providing light source device includes a collimating optical arrangement located between the micro-display and the first face 18 of the first plate-like waveguide 14. The collimating optical arrangement is operable to collimate light received from the micro-display and to inject the collimated image bearing light into the first plate-like waveguide 14 through the first face 18.

The collimated image bearing light produced by the collimating optical arrangement has a small exit pupil and is fed into the first plate-like waveguide 14, which performs the function of stretching the horizontal pupil of the final display. The output from the first plate-like waveguide 14 is fed into the second plate-like waveguide 16, which is arranged to stretch the vertical pupil of the final display and also to act as a combiner for the projection display 10 through which the observer 12 views an outside world scene 20 along a line of sight 22 of the observer 12 through the second plate-like waveguide 16 with information to be displayed to the observer 12 overlaid on the outside world scene 20. In this manner, the image to be displayed to the observer 12 looking through the second plate-like waveguide 16 defines a large exit pupil and a large field of view whilst using a small image generating light source.

Image bearing light injected into first plate-like waveguide 14, via first face 18 is incident on a first grating 24 arranged internally within the first plate-like waveguide 14 and substantially parallel with the first face 18. Light impinging on the first grating 24 diffracts therefrom such that the incidence angle of the light on the internal surfaces of the first plate-like waveguide 14 is greater than the critical angle for the material from which the first plate-like waveguide 14 is made. The image bearing light is constrained within the first plate-like waveguide 14 to propagate along the first plate-like waveguide 14 reflecting from each internal surface in turn to follow a predefined light path 26. Thus, the relative field angles of the light incident on the first plate-like waveguide 14 at the first face 18 are preserved within the first plate-like waveguide 14 and the information required to regenerate the original image is preserved.

The first grating 24 also serves to radiate the image bearing light out of the first plate-like waveguide 14. The first grating 24 is a low efficiency grating which diffracts a small amount of light out of the first plate-like waveguide 14 on each interaction with incident image bearing light.

The second plate-like waveguide 16 is located with a first face 28 parallel with a second face 30 of the first plate-like waveguide 14 and is arranged to receive the image bearing light exiting the second face 30 of the first plate-like waveguide 14. The second face 30 is parallel to the first face 18 of the first plate-like waveguide 14. The first face 28 of the second plate-like waveguide 16 is located adjacent and close to the second face 30 of the first plate-like waveguide 14. The second plate-like waveguide 16 includes a second grating 32 located therein arranged substantially parallel to the first face 28 of the second plate-like waveguide 16 and the second grating 32 is operable to diffract each impinging ray of image bearing light received from the first grating 24 of the first plate-like waveguide 14 at an angle that is larger than the critical angle for the material from which the second plate-like waveguide 16 is made. Accordingly, received image bearing light will propagate inside the second plate-like waveguide 16 to follow the predefined light path 26. The image bearing light continues along the light path 26 to a third grating 34 arranged on or within the second plate-like waveguide 16, which is arranged to diffract the received image bearing light out of the second plate-like waveguide 16 towards the observer 12.

The second grating 32 is arranged such that its diffractive power is rotated through 90 degrees to that of the diffractive power of the first grating 24 to rotate incident image bearing light towards the third grating 34.

The third grating 34 is a low efficiency grating, such that as image bearing light propagates along the light path 26 within the second plate-like waveguide 16, each interaction with the third grating 34 causes a small proportion of the image bearing light to be diffracted out of the second plate-like waveguide 16. Image bearing light which is not diffracted out of the second plate-like waveguide 16 continues to propagate within the second plate-like waveguide 16. Accordingly, a large number of parallel rays of image bearing light exit the second plate-like waveguide 16 through the third grating 34 towards the observer 12, which originated at discrete points on the micro-display forming the image generating light source device. As the relative field angles of the image bearing light have been preserved within the first and second plate-like waveguides 14, 16, the correct image to be conveyed to the observer 12 is presented for viewing when the observer 12 views an outside world scene 20 through the second plate-like waveguide 16.

According to a first aspect of the invention a waveguide includes a substrate of material having two opposed substantially parallel faces, the substrate of material being arranged to transmit light within the substrate of material, between the parallel faces, under total internal reflection and an optical layer arranged on each of the parallel faces, the optical layer being arranged to reduce the critical angle required for total internal reflection of light within the substrate of material.

In this manner, the critical angle to enable total internal reflection of light within the waveguide is reduced. Furthermore, the total field of view capable of transmission by the waveguide is increased.

A grating element may be arranged within the substrate of material and may be arranged to diffract a portion of light incident thereon out of the substrate of material and to allow the remainder of the light to be transmitted within the substrate of material under total internal reflection.

As the critical angle of the substrate of material has been reduced, the number of interactions between light and the grating element per unit length of the grating element is increased.

According to another aspect of the invention a projection display, for displaying an image to an observer, includes a first waveguide element arranged to be light transmissive, an image-providing light source device arranged to generate an image and to inject image bearing light into the first waveguide element, a first grating element associated with the first waveguide element arranged to direct the image bearing light internally along the first waveguide element under total internal reflection and via which the image bearing light is outputted from the first waveguide element, a second waveguide element arranged to be light transmissive and transparent that includes a second grating element arranged to receive the image bearing light from the first waveguide element and to direct the image bearing light along the second waveguide element under total internal reflection, the second waveguide element further includes a third grating element arranged to diffract received image bearing light out of the second waveguide element towards an observer and wherein the first and second waveguide elements each include two substantially parallel faces and one or both of the waveguide elements has an optical layer arranged on each of its parallel faces, the optical layer being arranged to reduce the critical angle required for total internal reflection of image bearing light within the waveguide element.

In this manner, the critical angle to enable total internal reflection of light within the first and/or second the waveguide is reduced. Furthermore, the total field of view capable of transmission within the projection display is increased.

The first and third grating elements may be arranged to diffract a portion of image bearing light incident thereon out of the associated waveguide element and to allow the remainder of the image bearing light to be transmitted within the associated waveguide element under total internal reflection.

As the critical angle of the first and second waveguide elements has been reduced, the number of interactions between image bearing light and the grating element per unit length of the grating element is increased.

Each optical layer may be an optical coating applied to the associated parallel face.

One or more of the grating elements may be holographic optical elements or semi-reflective surfaces.

The first waveguide element may be plate-like, the second waveguide element may plate-like and the first and second waveguide elements may be arranged substantially parallel to one another.

Alternatively, the first waveguide element and the second waveguide element may be arranged substantially in the same plane. The first waveguide element and the second waveguide element may be formed within a single piece of material.

As a further alternative, the first waveguide element may be rod-like, the second waveguide element may be plate-like and the first and second waveguide elements may be arranged such the image bearing light exits the first waveguide element along a longitudinal axis of the first waveguide element and enters the second waveguide element to propagate along a propagation axis of the second waveguide element.

The waveguide and/or the projection display of the invention may be included in a Head Up Display, or Helmet Mounted Display, or Head Mounted Display.

The invention will now be described, by way of example only, with reference to the accompanying drawings, in which:
Figure 1 illustrates, in perspective view, a prior art projection display including parallel waveguides;
Figure 2 illustrates, in elevation view, the prior art projection display of Figure 1;
Figure 3 illustrates, in elevation view, a waveguide according to the prior art;
Figure 4 illustrates, in elevation view, a waveguide according to the present invention;
Figure 5 illustrates a graph of the internal reflection response curve for a prior art waveguide and a waveguide according to the present invention;
Figure 6 illustrates, in elevation view, a waveguide showing total internal reflection of light for the prior art and the present invention; and
Figure 7, illustrates, in elevation view, a comparison of the field of view of a prior art waveguide with a waveguide of the present invention.

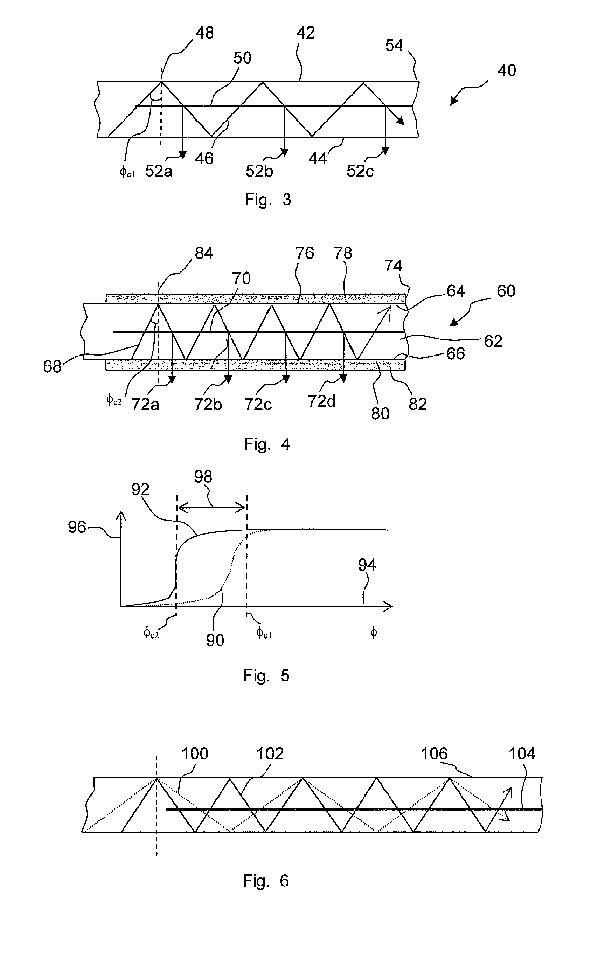

Referring to Figure 3, there is shown a waveguide 40 formed from a substrate of material, comprising a first internal face 42 and a second internal face 44 parallely spaced from one another. The waveguide 40 is arranged to total internally reflect injected light along a light path 46 between the first and second faces 42, 44. In order to achieve total internal reflection of light along the light path 46, injected light is arranged to enter the waveguide 40 at greater than the critical angle φ_{c1} for the substrate of material from which the waveguide 40 is formed, as measured from a normal axis 48 to the waveguide 40.

A grating element 50 carried within the layer of material of the waveguide 60 is arranged such that impinging light following the light path 46 is either diffracted out of the waveguide 60 as a pupil of image bearing light 52a to 52c, for viewing by the observer, or the image bearing light passes through the grating element 50 and is reflected by either the first internal face 42 or the second internal face 44 of the waveguide 40 so as to propagate further along the waveguide 40 towards a distal end 54. Accordingly, the light internally reflected within the waveguide 40 will impinge on the grating element 50 further along the light path 46.

Referring to Figure 4, there is shown a waveguide 60 including a substrate of material 62, which has a first internal face 64 and a second internal face 66 parallely spaced from one another and arranged to allow propagation of image bearing light along a propagation axis to follow a light path 68 within the substrate of material 62 by total internal reflection of the image bearing light. The substrate of material 62 is a light transparent material arranged to allow an observer, not illustrated, to look through the substrate of material 62 whilst also arranged to carry image bearing light to provide a display image to the observer overlaid on a forward scene viewed through the waveguide 60.

A grating element 70 carried within the substrate of material 62 is arranged such that impinging image bearing light following the light path 68 is either diffracted out of the substrate of material 62 as a pupil of image bearing light 72a to 72d for viewing by the observer, or the image bearing light passes through the grating element 70 and is internally reflected by either the first or second internal face 70, 72 of the substrate of material 62 so as to propagate further along the light path 68 towards a distal end 74. Accordingly, the image bearing light internally reflected within the substrate of material 62 will impinge on the grating element 70 further along the light path 68.

A first external surface 76 of the substrate of material 62 is coated with an optical layer 78 and a second external surface 80 of the substrate of material 62 is coated with an optical layer 82. The optical layers 80, 82 are arranged such that they reduce the critical angle φ_{c2} required for total internal reflection of image bearing light within the substrate of material 62, as measured from a normal axis 84 to the waveguide 60. The optical layers 78 and 82 can be formed from using a dielectric thin film coating.

Referring to Figure 5, which provides a comparison of the angle φ that image bearing light is injected into a prior art waveguide 40, as indicated by line 90, and injected into a waveguide 60 according to the present invention, as indicated by line 92, along the abscissa 94, against the light internally reflected within the waveguides 40, 92, along the ordinate 96. It will be observed from a comparison of the response curves for the prior art waveguide 40 and the waveguide 60 of the present invention, lines 90 and 92, that the prior art waveguide 40 will provide a critical angle φ_{c1} that is greater than the critical angle φ_{c2} provided by the waveguide 60 according to the present invention.

The difference between the two critical angles φ_{c1} and φ_{c2}, indicated by double arrow 98, provides the waveguide 60 with an advantage of being able to be used for a greater angular range of injected image bearing light than the prior art waveguide 40. Furthermore, and as observed from a comparison of Figures 3 and 4, as the critical angle φ_{c2} for injecting image bearing light has been reduced, the image bearing light will interact with the grating element 70 more often than that of the prior art described with reference to Figure 3. Accordingly, more pupils of image bearing light 72a to 72d will exit the waveguide 60, thereby mitigating pupil banding as perceived by the observer.

Referring to Figure 6, a comparison of the light path 100 as provided by the prior art waveguide and the light path 102 as provide by the waveguide of the present invention indicates that light interacts with a grating element 104 more often as the critical angle for total internal reflection within a waveguide 106 decreases.

It will be understood that the injection of image bearing light into the waveguide 60 can be via one or more reflective, transmissive or refractive optical elements. Furthermore, the grating element 70 can be reflective, thereby being arranged on or near one surface 64 or 66, or transmissive, thereby being arranged towards the centre of the waveguide 60.

Such a waveguide 60 can be used in a projection display, for displaying an image to an observer, such as that described with reference to Figures 1 and 2 to correct irregularity of the intensity of image bearing light from the first grating 24 of the first plate-like waveguide 14 and/or the third grating 34 of the second plate-like waveguide 16.

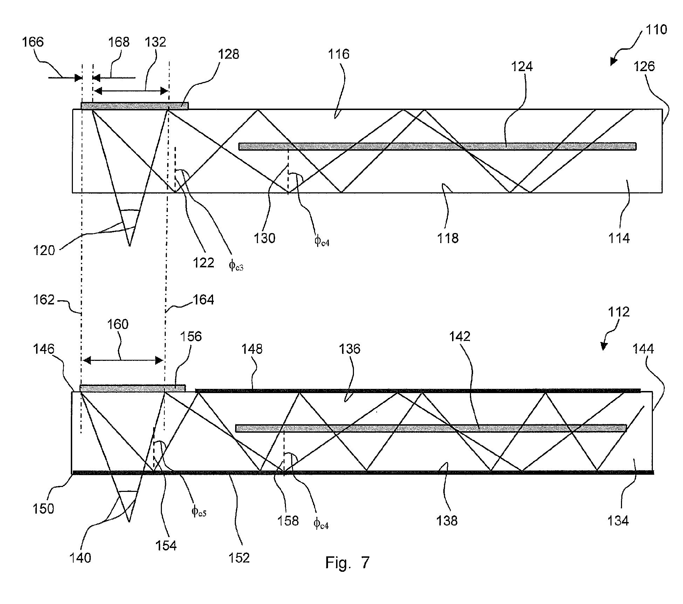

Referring to Figure 7 there is shown a prior art waveguide 110 compared to a waveguide 112 according to the present invention. Prior art waveguide 110 is formed from a layer of material 114, comprising a first internal face 116 and a second internal face 118 parallely spaced from one another. The waveguide 110 is arranged to total internally reflect injected light along a light path 120 between the first and second faces 116, 118. In order to achieve total internal reflection of light along the light path 120, injected light is arranged to enter the waveguide 110 at greater than the critical angle φ_{c3} for the layer of material 114 from which the waveguide 110 is formed, as measured from a normal axis 122 to the waveguide 110.

A grating element 124 carried within the layer of material 114 of the waveguide 110 is arranged such that impinging light following the light path 120 is either diffracted out of the waveguide 110 as a pupil of image bearing light, as previously described with reference to Figure 3, for viewing by the observer, or the image bearing light passes through the grating element 124 and is reflected by either the first internal face 116 or the second internal face 118 of the waveguide 110 so as to propagate further along the waveguide 110 towards a distal end 126. Accordingly, the light internally reflected within the waveguide 110 will impinge on the grating element 124 further along the light path 120.

Light injected into the waveguide 110 is arranged to impinge on an optical element 128 arranged on or within the substrate of material 114 that is arranged to reflect the light such that it follows the light path 120. The minimum angle for φ_{c3} is dependent on the critical angle for the substrate of material 114. A maximum angle φ_{c4}, as measured from a normal axis 130 to the waveguide 110, for light injected into the waveguide 110 is dependent upon the desired interaction between light following the light path 120 and the grating element 124 and the period between pupils associated with light exiting the waveguide 110, which in turn determines perceived pupil banding. Accordingly, the angles φ_{c3} and φ_{c4} determine the total field of view 132 of the image transmitted by the waveguide 110.

This is to be compared to the waveguide 112 of the present invention, which includes a substrate of material 134, which has a first internal face 136 and a second internal face 138 parallely spaced from one another and arranged to allow propagation of image bearing light along a propagation axis to follow a light path 140 within the substrate of material 134 by total internal reflection of the image bearing light. The substrate of material 134 is a light transparent material arranged to allow an observer, not illustrated, to look through the substrate of material 134 whilst also arranged to carry image bearing light to provide a display image to the observer overlaid on a forward scene viewed through the waveguide 112.

A grating element 142 carried within the substrate of material 134 is arranged such that impinging image bearing light following the light path 140 is either diffracted out of the substrate of material 134 as a pupil of image bearing light, as previously described with reference to Figure 4, for viewing by the observer, or the image bearing light passes through the grating element 142 and is internally reflected by either the first or second internal face 136, 138 of the substrate of material 134 so as to propagate further along the light path 140 towards a distal end 144. Accordingly, the image bearing light internally reflected within the substrate of material 134 will impinge on the grating element 142 further along the light path 140.

A first external surface 146 of the substrate of material 134 is coated with an optical layer 148 and a second external surface 150 of the substrate of material 134 is coated with an optical layer 152. The optical layers 148, 152 are arranged such that they reduce the critical angle φ_{c5} required for total internal reflection of image bearing light within the substrate of material 134, as measured from a normal axis 154 to the waveguide 112. The optical layers 148 and 152 can be formed from using a dielectric thin film coating.

Image bearing light injected into the waveguide 112 is arranged to impinge on an optical element 156 arranged on or within the substrate of material 134 that is arranged to reflect the image bearing light such that it follows the light path 140. The minimum angle for φ_{c5} is dependent on the critical angle for the substrate of material 134 as reduced by the addition of optical layers 148, 152. As for prior art waveguide 110, the maximum angle φ_{c4}, as measured from a normal axis 158 to the waveguide 112, for light injected into the waveguide 112 is dependent upon the desired interaction between image bearing light following the light path 140 and the grating element 142 and the period between pupils associated with image bearing light exiting the waveguide 112, which in turn determines perceived pupil banding. Accordingly, the angles φ_{c4} and φ_{c5} determine the total field of view 160 of the image transmitted by the waveguide 112.

As will be noted from chained lines 162 and 164 and double arrows 166 and 168, the total field of view 160 of waveguide 112 is greater than the total field of view 132 of prior art waveguide 110. The increased total field of view 160 is provided by the reduced critical angle φ_{c5} provided by optical layers 148, 152.

It will be understood that the injection of image bearing light into the waveguide 112 can be via one or more reflective, transmissive or refractive optical elements. Furthermore, the grating element 142 can be reflective, thereby being arranged on or near one surface 136 or 138, or transmissive, thereby being arranged towards the centre of the waveguide 112.

Such a waveguide 112 can be used in a projection display, for displaying an image to an observer, such as that described with reference to Figures 1 and 2 to correct irregularity of the intensity of image bearing light from the first grating 24 of the first plate-like waveguide 14 and/or the third grating 34 of the second plate-like waveguide 16 and/or to increase the field of view of such a projection display.

## Claims

1. A waveguide, including:
a substrate of material having two opposed substantially parallel faces, the substrate of material being arranged to transmit light within the substrate of material, between the parallel faces, under total internal reflection; and
an optical layer arranged on each of the parallel faces, the optical layer being arranged to reduce the critical angle required for total internal reflection of light within the substrate of material.

2. A waveguide, as claimed in Claim 1, wherein a grating element is arranged within the substrate of material and is arranged to diffract a portion of light incident thereon out of the substrate of material and to allow the remainder of the light to be transmitted within the substrate of material under total internal reflection.

3. A projection display, for displaying an image to an observer, including:
a first waveguide element arranged to be light transmissive;
an image-providing light source device arranged to generate an image and to inject image bearing light into the first waveguide element;
a first grating element associated with the first waveguide element arranged to direct the image bearing light internally along the first waveguide element under total internal reflection and via which the image bearing light is outputted from the first waveguide element;
a second waveguide element arranged to be light transmissive and
transparent that includes a second grating element arranged to receive the image bearing light from the first waveguide element and to direct the image bearing light along the second waveguide element under total internal reflection;
the second waveguide element further includes a third grating element arranged to diffract received image bearing light out of the second waveguide element towards an observer; and
wherein the first and second waveguide elements each include two substantially parallel faces and one or both of the waveguide elements has an optical layer arranged on each of its parallel faces, the optical layer being arranged to reduce the critical angle required for total internal reflection of image bearing light within the waveguide element.

4. A projection display, as claimed in Claim 3, wherein the first and third grating elements are arranged to diffract a portion of image bearing light incident thereon out of the associated waveguide element and to allow the remainder of the image bearing light to be transmitted within the associated waveguide element under total internal reflection.

5. A projection display, as claimed in either Claim 3 or 4, wherein each optical layer is an optical coating applied to the associated parallel face.

6. A projection display as claimed in any of Claims 3 or 5, wherein one or more of the grating elements are holographic optical elements or semi-reflective surfaces.

7. A projection display, as claimed in any of Claims 3 to 6, wherein the first waveguide element is plate-like, the second waveguide element is plate-like and the first and second waveguide elements are arranged substantially parallel to one another.

8. A projection display, as claimed in any of Claim 3 to 6, wherein the first waveguide element and the second waveguide element are arranged substantially in the same plane.

9. A projection display, as claimed in Claim 8, wherein the first waveguide element and the second waveguide element are formed within a single piece of material.

10. A projection display, as claimed in any of Claims 3 to 6, wherein the first waveguide element is rod-like, the second waveguide element is plate-like and the first and second waveguide elements are arranged such the image bearing light exits the first waveguide element along a longitudinal axis of the first waveguide element and enters the second waveguide element to propagate along a propagation axis of the second waveguide element.

11. A Head Up Display, or Helmet Mounted Display, or Head Mounted Display including a waveguide as claimed in Claim 1 or Claim 2.

12. A Head Up Display, or Helmet Mounted Display, or Head Mounted Display including a projection display as claimed in any of Claims 3 to 10.
